# EUROPEAN PATENT APPLICATION

(11) **EP 2 330 758 A1**
(43) Date of publication of application: **08.06.2011**
(21) Application number: 09177808.4
(22) Date of filing: 02.12.2009
(51) Int. Cl.: H04B 10/148

(54) **Coherent optical receiver system and method for detecting phase modulated signals**

(71) Applicant: University College Cork-National University of Ireland, Cork, Cork (IE)
(72) Inventor: Ellis, Andrew, Cheshire (GB); Ibrahim, Selwan K., Cork City (IE); Sygletos, Stylianos, Cork City (IE)
(74) Representative: Lucey, Michael

(57) **Abstract**

The invention provides a homodyne coherent receiver, suitable for high speed phase shift keying (PSK), the receiver comprising means for receiving an incoming signal. A signal conditioning sub-system generates a carrier component from the incoming signal; and an optical injection phase locked loop (OIPLL) phase locks the generated carrier component of the incoming signal. The solution of the present invention enables DSP free detection of optical PSK signals, required in next generation fibre transmission systems. In addition, the invention can provide superior receiver sensitivity performance comparing to prior art systems. Also, the method is advantageous in terms of cost and energy efficiency.

## Description

### Field of the Invention

The invention relates to optical receivers. In particular the invention relates to a coherent Optical Receiver that is able to detect carrier-less phase shift keying (PSK) signals using an appropriate carrier recovery technique.

### Background to the Invention

Currently commercial solutions for coherent optical receivers make heavy usage of high speed digital signal processing (DSP) to detect the received information. An example of a coherent optical receiver can be found on www.nortel.com. A high speed DSP solution requires high speed Logic and analogue to digital converters (ADC) which leads to higher power consumption, cost/complexity, and significant investment in ASIC for each generation. It also requires error forward error correction (FEC) encoding.

Research has been conducted to provide DSP free coherent detection using optical phase locked loop (OPLL), for example as shown in US patent Number US5,007,106, J.M. KAHN et al., "Optical homodyne receiver". OPLL can be used for homodyne detection of ASK/PSK based signals which offers improved receiver sensitivity over direct detection. The main drawback is the requirement of low loop delay controllers and very narrow linewidth lasers at the transmitter and receiver which increases the cost and complexity. Alternatively Heterodyne can be used (see for example www.chipsat.com).The drawback with the heterodyne detection is it has worse receiver sensitivity than homodyne detection and requires high speed electronics and double bandwidth of that required by homodyne detection.

Another method provides for coherent detection using optical injection phase locked loop (OIPLL) (with no preconditioning) that combines optical injection locking with low-bandwidth electronic feedback to give low-delay, wide bandwidth OPLL with large locking range. The drawback with this method is that it can only work with carrier-based modulation formats (i.e. ASK) and if carrier-less modulation format (i.e. PSK) is to be used, a pilot tone must be transmitted in the orthogonal polarization resulting in worse receiver sensitivity and spectral efficiency. These types of coherent detection are dislosed in published papers by M.J. Fice et al., "Frequency-Selective Homodyne Coherent Receiver with an Optical Injection Phase Lock Loop", Paper OWT1, Published in proceedings OFC 2008 and another paper M.J. Fice et al., "Homodyne Coherent Receiver with Phase Locking to Orthogonal-Polarisation Pilot Carrier by Optical Injection Phase Lock Loop", Paper OTuGl, Published in proceedings OFC 2009.

There is therefore a need to provide an optical receiver and method to overcome the above mentioned problems.

### Summary of the Invention

According to the invention there is provided, as set out in the appended claims, a homodyne coherent receiver, suitable for high speed phase shift keying (PSK), said receiver comprising:
means for receiving an incoming signal;
a signal conditioning sub-system for generating a carrier component from said incoming signal; and
an optical injection phase locked loop (OIPLL) to phase lock the generated carrier component of the incoming signal.

The solution of the present invention enables DSP free detection of optical PSK signals, required in next generation fibre transmission systems. In addition, the invention can provide superior receiver sensitivity performance compared to direct detection methods. Also, the method is advantageous in terms of cost and energy efficiency. Avoiding complex and high speed electronic processing the new system provides simple and low cost means to generate a synchronized local oscillator (LO), which is required in the homodyne detection process, from a received PSK signal.

The generation of the LO is achieved by a combination of a signal conditioning subsystem and an OIPLL subsystem. The signal conditioning subsystem strips the modulation off the PSK signal and extracts its carrier. The OIPLL subsystem selects and regenerates the recovered carrier component providing a clean cw optical wave phase aligned to the received PSK signal.

In one embodiment the laser of the OIPLL acts as a local oscillator synchronized to the generated carrier component of the incoming signal.

In one embodiment the signal conditioning sub-system comprises a carrier extraction optoelectronic circuit based on using a 1-bit delay Mach-Zehnder delay interferometer (MZDI) (DPSK demodulator) and a DPSK modulator to strip the modulation off the signal and recover said carrier component.

In one embodiment the signal conditioning sub-system comprises a carrier extraction system based on a nonlinear process of FWM combined with a beat frequency detector to regenerate the carrier component in combination with the OIPLL laser.

In one embodiment the incoming signal comprises a received phased modulated signal (D)PSK and converted to the intensity domain (DPSK demodulation) using a 1-bit delay (MZDI) and a single/balanced photo diode.

In one embodiment an electric differential encoder reverses the function of the MZDI.

In one embodiment the recovered carrier of the received optical signal is injected through an optical circulator into said OIPLL subsystem.

In one embodiment a slave laser of the OIPLL subsystem oscillates at the same frequency with the injected recovered carrier, such that part of the slave laser output light is directed into a negative feedback control circuit to stabilize the locking process against frequency drifts.

In one embodiment the feedback makes use of a low speed photodiode to generate a frequency error signal when the free running frequencies of the slave laser and the injected carrier are mismatched.

In one embodiment the error signal is processed by a controller that tunes the slave laser to maintain the required frequency matching.

In one embodiment there is provided an adaptive controller circuit to stabilize the operation of the optical injection locked laser.

In one embodiment the phase tracking system comprises means to track any differences in the phase between the received signal and the LO.

In one embodiment the phase tracking system comprises a low-bandwidth control loop driving a piezo-electric (PZT) fibre stretcher/cylinder with means to compensate for any phase changes.

In one embodiment the receiver comprises a 90° optical hybrid sub-system comprising means to recover the signal and extract the information in both I and Q quadratures, such that an error signal for the phase tracking system is obtained.

In one embodiment the 90 degree optical hybrid sub-system comprises an array of balanced photodiodes.

In one embodiment the laser comprises a fabry-perot laser, a single mode laser or a tunable laser.

In one embodiment the receiver comprises means for using a pilot tone and electrical dither to provide a lock-in amplifier.

In a further embodiment there is provided a method of controlling a receiver, suitable for high speed phase shift keying (PSK), said method comprising the steps of:
receiving an incoming signal;
generating a carrier component from said incoming signal using a signal conditioning sub-system; and
phase locking the generated carrier component of the incoming signal using an optical injection phase locked loop (OIPLL) laser.

In a further embodiment of the invention there is provided a receiver for use in a communication system, said receiver comprising:
means for receiving an incoming signal;
a signal conditioning sub-system for generating a carrier component from said incoming signal; and
an optical injection phase locked loop (OIPLL) to phase lock the generated carrier component of the incoming signal.

There is also provided a computer program comprising instructions to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-
Figure 1 illustrates a block diagram of a PSK coherent receiver using OIPLL according to the invention;
Figure 2 illustrates a schematic diagram of the signal conditioning sub-system using modulation stripping;
Figure 3(a) illustrates a spectrum screenshot of 40Gbit/s (D)PSK signal (left), extracted carrier (right) (VPI simulation);
Figure 3(b) illustrates a spectrum of 10.664Gbit/s (D)PSK signal (left), extracted carrier (right);
Figure 4(a) illustrates a schematic diagram of the signal conditioning sub-system using non-linear process FWM;
Figure 4(b) illustrates an optical Spectrum measured at points a, b, c, d, e, and electrical spectrum measured at f;
Figure 5 (a) illustrates a block diagram of the OIPLL; and
Figure 5(b) illustrates a frequency error curves at the output of the low speed photodiode, for different injection locking conditions.

### Detailed Description of the Drawings

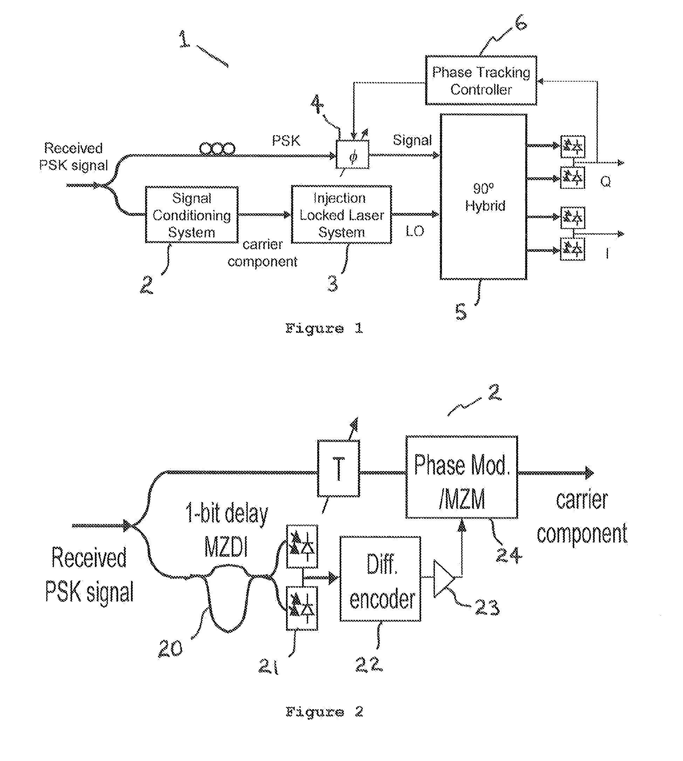

Referring now to the Figures, and initially Figure 1, there is illustrated a receiver, suitable for high speed phase shift keying (PSK), indicated generally by the reference numeral 1. A received signal is tapped off and fed into a signal conditioning sub-system 2 that generates a carrier component from the received signal. An optical injection phase locked loop (OIPLL) 3 phase locks the generated carrier component of the incoming signal. A phase tracking system 4 is used to track any environmentally induced slow phase differences between the received signal and the generated LO. A 90° optical hybrid sub-system 5 with an array of balanced photodiodes receives signals from the OIPLL 3 and the phase tracking sub-system 4. The hybrid and photodiodes sub-system 5 is well known in literature of coherent receivers.

In addition to the three main sub-systems shown in Fig. 1, a low-cost low-power mixed analogue/digital microcontroller 6 may be employed in order to implement all the control functions of the phase tracking and OIPLL that are required for the operation of the coherent receiver.

The receiver shown in Figure 1 will preferably be a DSP free homodyne receiver based on OIPLL, compatible with advanced modulation formats (i.e. PSK). The proposed homodyne coherent receiver is based on low cost commercially available components using phase injection locking techniques, the operation of which will now be discussed below in more detail.

### Signal conditioning sub-system

Figure 2 shows the signal conditioning subsystem 2 in more detail. In order to enable the OIPLL 3 to work with carrier-less PSK signals, a signal conditioning sub-system is required that shows a schematic of a proposed carrier component extraction sub-system. The received phase modulated signal (D)PSK is converted to the intensity domain (DPSK demodulation) using a 1-bit delay Mach-Zehnder 20 delay interferometer MZDI followed by a single/balanced photo diode 21. To reverse the function of the MZDI an electric differential encoder 22 is used for the demodulated signal. The resulting electrical signal is then amplified by amplifier 23, inverted and used to drive a phase modulator (or Mach-Zehnder Modulator (MZM)) 24 to strip the data modulation.

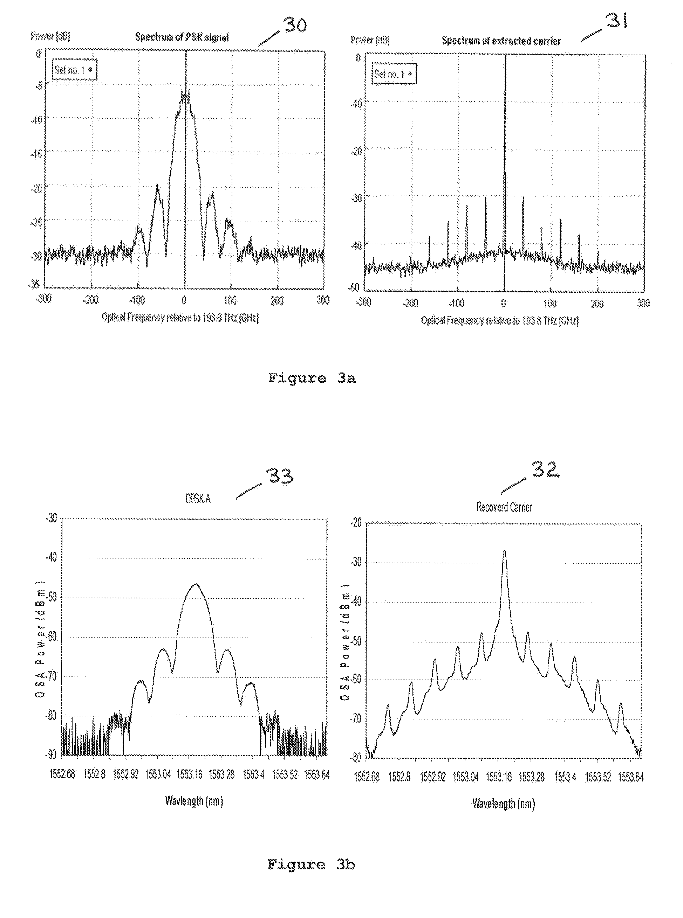

Figure 3 (a) shows simulation results for the optical spectrum (measured with a resolution bandwidth RB of 1.25GHz) of a 40Gbit/s (D)PSK signal 30 (left) and an extracted carrier signal 31 (right) using a MZM driven as a DPSK modulator as shown in Figure 2 above. Figure 3 (b) shows an experimental verification of the scheme by extracting a carrier component 32 (right) from a carrier-less 10.664Gbit/s (D)PSK signal 33 (left).

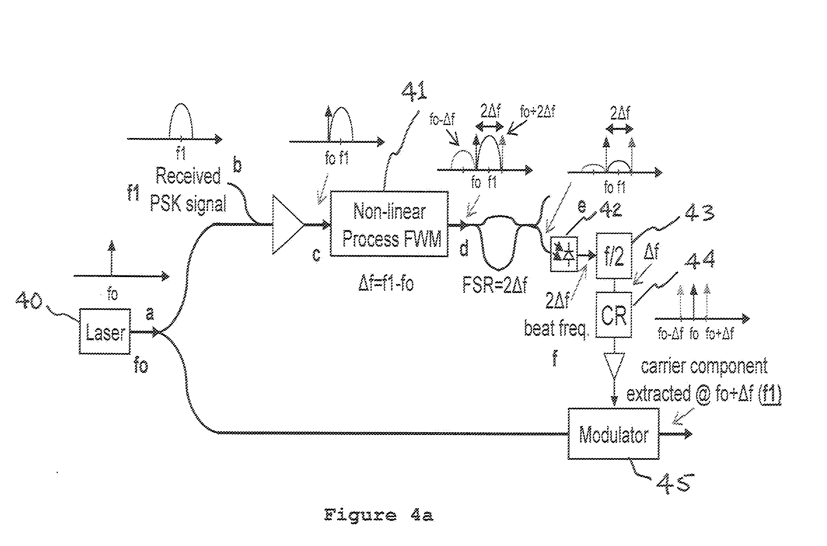

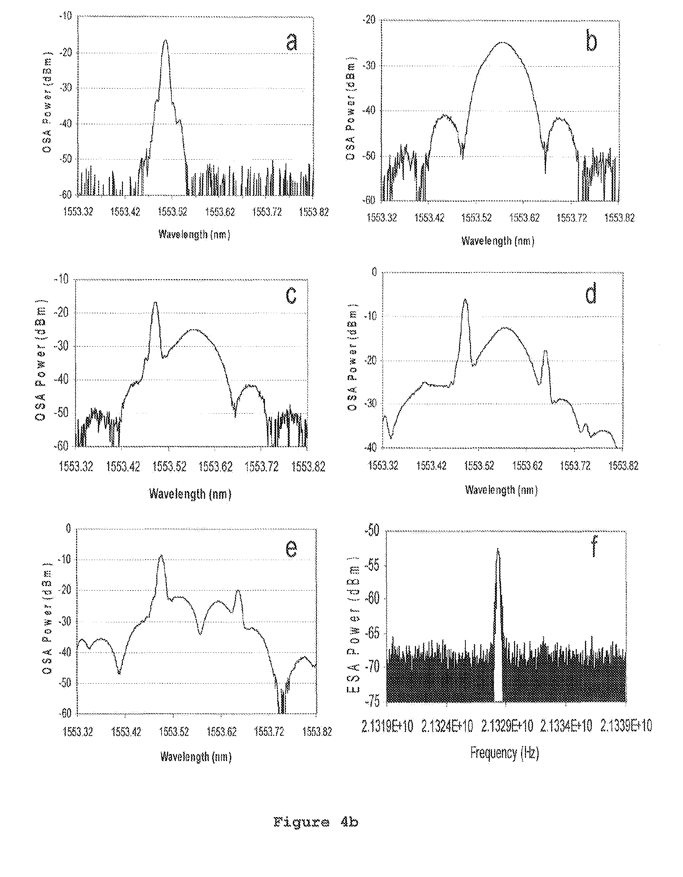

It will be appreciated that alternative techniques to extract the carrier component is also proposed such as using four-wave mixing in a nonlinear medium with wavelength conversion, as shown in Figure 4. Figure 4 shows the received PSK signal at frequency (f1) coupled with a free running CW laser source (fo) 40 before entering a non-linear medium in this case (EDFA+HNLF) 41 (an SOA could also be used as a non-liner medium). Due to the non-linear process of the four wave mixing in the high non-linear fibre (HNLF) a carrier component will appear at fo+2Δf, where Δf=f1-fo. The signal is then passed to a dis-interleaver based on an AMZI with an FSR of 2Δf to filter out the fo and (fo+2Δf) components. The beat frequency 2Δf is then detected using a photodiode 42 and is then divided by 2 using a frequency divider 43 to generate the electrical Δf frequency component. A clock recovery circuit 44 is used to clean up the Δf clock signal which is then used to drive an amplitude modulator 45 (EAM/MZM) which will modulate the CW laser frequency (fo) resulting in the generation of the side band frequencies fo-Δf and fo+Δf (f1), where the latter will be used to injection lock a laser in the coherent receiver. A single side band (SSB) modulator can also be used instead to induce a Δf frequency shift to the CW laser source (fo).

A demonstration of Figure 4a is shown in Figure 4b, where (a) is the optical spectrum of the CW laser, (b) is the optical spectrum of a 10.66Gbit/s DPSK signal, (c) is the optical spectrum when both the CW laser and DPSK signal are combined, (d) is the optical spectrum of the FWM components, (e) is the optical spectrum after passing the signal (d) through a 21.33GHz dis-interleaver, (f) is the electrical spectrum of the beat signal between the CW laser and the FWM generated component measured by detecting the signal of (e) using a 50GHz photodiode and a 50GHz electrical spectrum analyser (ESA).

### Optical Injection Phase Lock Loop (OIPLL) sub-system

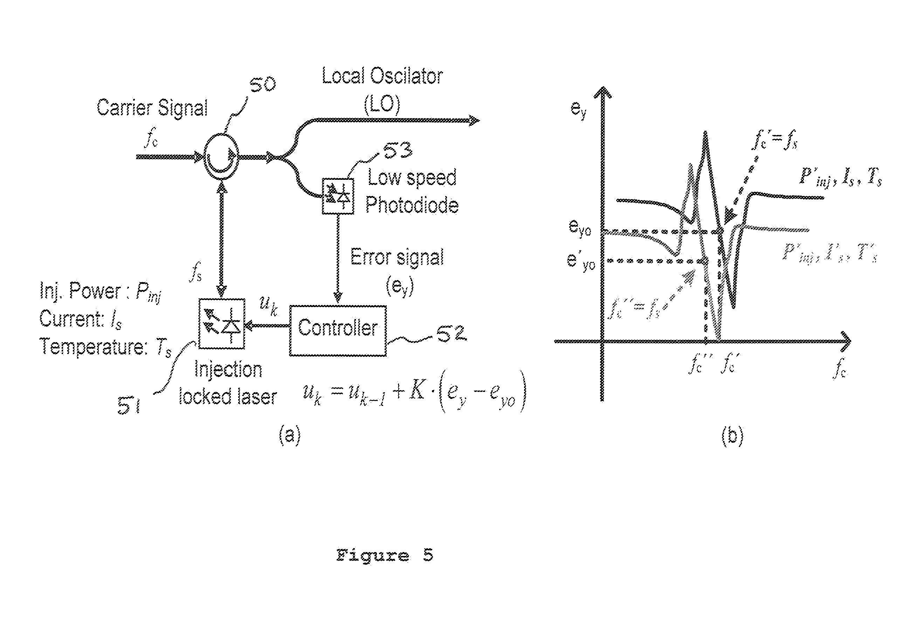

A detailed schematic diagram of the proposed homodyne (OIPLL) 3 is illustrated in Figure 5. The recovered carrier of the received optical signal is injected, through an optical circulator 50, into a semiconductor slave laser 51. When the slave laser 51 oscillates at the same frequency with the injected carrier locking is acquired, part of the slave laser output light is then directed into a negative feedback control circuit 52 that stabilizes the locking process against frequency drifts, due to either glitches in the laser controller or environmental drifts. The feedback makes use of a low speed photodiode 53 to generate a frequency error signal when the LO and the injected carrier are frequency mismatched.

Figure 5(b) illustrates the frequency error curves at the output of the low speed photodiode, for different injection locking conditions. The error signal is processed by a controller that tunes the slave laser 51 to maintain the required frequency matching. Accurate knowledge of the optimum operating point, *where ƒ'_{c} = ƒₛ,* is required to maximize the OIPLL performance. Results have indicated that this point is not fixed but depends on the various injection locking conditions, such as the current and the temperature of the local laser, as well as the injected power. Each time there is a change on one of these parameters the controller should account for the new reference error point *é_{yo}*. This property introduces critical design challenges in the development of the receiver. Two different solutions for the tracking of the optimum point can be used and are chosen depending on operating conditions, such as performance, reliability, robustness and cost.

### Implementing an Adaptive Controller

Another aspect of the invention provides for detailed characterization of the OIPLL to generate a 3-D look-up table can be derived containing the reference error points *e _{yo}* as a function of the input power level, temperature, and current of the injection locked laser. Sensors can identify the injection locking conditions in terms of those three variables, and the reference error point will be extrapolated from the look-up table. An adaptive controller will be implemented on a personal computer (PC) using LabView and a commercial data acquisition board to verify and optimize its operation. Once the optimum settings and algorithm is defined the controller can be implemented using a low-cost low-power microcontroller (for example TI MSP430) with integrated ADCs and PWM outputs.

### Implementing a lock-in amplifier using a pilot tone and electrical dither

In a further embodiment an optical pilot tone of small amplitude modulation depth (<1%) and of KHz range will be introduced on the recovered carrier. Accordingly, an electrical lock-in amplifier can be placed after the photodiode to extract what remains after the injection locking process. This type of scheme has shown that maximum suppression is introduced on the tone at the point of zero mismatch (*ƒ'_{c}=ƒₛ*), as shown in Figure 5b. With the help of electrical dithering, that modulates the local laser, it is possible to identify the optimum operating point, where the phase of the dither shifts by n. To extract this information an additional lock-in element is required. A commercial lock-in amplifier with the aid of a Labview program running on a PC will be used to optimize this injection locking scheme can be provided. Both techniques mentioned in (a), and (b) can be selected depending on the application required.

### Phase tracking sub-system

Another aspect of the invention is use of the phase tracking system as shown in Figure 1. Once the carrier has been recovered using the OIPLL 4, it will be used in the 90° optical hybrid 5 to perform coherent homodyne detection. The phases of the received PSK signal and the regenerated carrier signal will vary at the input of the hybrid because of to the change in the fibre path lengths due to the thermal and environmental changes. In order to compensate for the phase changes a phase tracking system needs to be employed using a low-bandwidth control loop 6 driving a piezo-electric (PZT) fibre stretcher/cylinder. The controller can be implemented either as a standalone analogue circuit or as a digital controller in the previously mentioned low-cost microcontroller.

### System level integration of low cost lasers with optical hybrids and photodiode arrays

Again referring to Figure 1 the 90° optical hybrid sub-system 5 can be used to recover the signal and extract the information in both I and Q quadratures. This is useful to obtain the error signal for the phase tracking system and it enables the coherent receiver to be upgraded for compatibility with QPSK signals (information in both quadratures I and Q). It is envisaged that it will be possible to integrate the 90° optical hybrid with the laser and photodiodes as a standalone unit which could be a potential product to be used with other types of coherent receivers.

It will be appreciated that the invention is based on implementing a hardware optical coherent receiver for phase modulated signals using injection locking techniques enabled by using novel carrier extraction sub-systems and standalone digital microcontrollers. The receiver main application is for high speed coherent optical communication systems.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

## Claims

1. A homodyne coherent receiver, suitable for high speed phase shift keying (PSK), said receiver comprising:
means for receiving an incoming signal;
a signal conditioning sub-system for generating a carrier component from said incoming signal, **characterised by**:
an optical injection phase locked loop (OIPLL) laser to phase lock the generated carrier component of the incoming signal.

2. The homodyne coherent receiver as claimed in claim 1 wherein said OIPLL laser acts as a local oscillator with the generated carrier component of the incoming signal.

3. The homodyne coherent receiver as claimed in claims 1 or 2 wherein the signal conditioning sub-system comprises a carrier extraction system based on using an AMZI DPSK demodulator and a DPSK modulator to strip the modulation off the signal and recover said carrier component.

4. The homodyne coherent receiver as claimed in any preceding claim wherein the incoming signal comprises a received phased modulated signal (D)PSK and converted to the intensity domain using a 1-bit delay (MZDI) and a single/balanced photo diode.

5. The homodyne coherent receiver as claimed in any preceding claim wherein the signal conditioning sub-system comprises a carrier extraction system based on a nonlinear process of FWM combined with a beat frequency detector to regenerate the carrier component in combination with the OIPLL laser.

6. The homodyne coherent receiver as claimed in claim 4 wherein an electric differential encoder reverses the function of the MZDI.

7. The homodyne coherent receiver as claimed in any preceding claim wherein the recovered carrier of the received optical signal is injected through an optical circulator into said OIPLL laser.

8. The homodyne coherent receiver as claimed in claim 7 wherein a slave laser oscillates at the same frequency with the injected recovered carrier, such that part of the slave laser output light is directed into a negative feedback control circuit to stabilize the locking process against frequency drifts.

9. The homodyne coherent receiver as claimed in any preceding claim wherein feedback makes use of a low speed photodiode to generate a frequency error signal when the LO and the injected carrier are frequency mismatched.

10. The homodyne coherent receiver as claimed in claim 9 wherein the error signal is processed by a controller that tunes the slave laser to maintain the required frequency matching.

11. The homodyne coherent receiver as claimed in any preceding claim comprising an adaptive controller circuit to stabilize the operation of the optical injection locked laser.

12. The homodyne coherent receiver as claimed in claim 11 wherein the phase tracking system comprises means to track any differences in the phase between the received signal and the LO.

13. The homodyne coherent receiver as claimed in claims 11 or 12 wherein the phase tracking system comprises a low-bandwidth control loop driving a piezo-electric (PZT) fibre stretcher/cylinder with means to compensate for any phase changes.

14. The homodyne coherent receiver as claimed in any preceding claim comprising a 90° optical hybrid sub-system comprising means to recover the signal and extract the information in both I and Q quadratures, such that an error signal for the phase tracking system is obtained.

15. The homodyne coherent receiver as claimed in claim 14 wherein the 90° degree optical hybrid sub-system comprises an array of balanced photodiodes.
